(19) **Europäisches Patentamt**
**European Patent Office**
**Office européen des brevets**

(11) **EP 3 955 139 A1**

(12) **EUROPEAN PATENT APPLICATION**

(43) Date of publication:
**16.02.2022 Bulletin 2022/07**

(21) Application number: **21180269.9**

(22) Date of filing: **18.06.2021**

(51) International Patent Classification (IPC):
**G06F 17/11** (2006.01)    **G06Q 10/08** (2012.01)
**G01C 21/34** (2006.01)    **G06Q 10/04** (2012.01)
**G06N 3/04** (2006.01)    **G06N 5/00** (2006.01)
**G06N 7/00** (2006.01)

(52) Cooperative Patent Classification (CPC):
**G06F 17/11; G01C 21/343; G06Q 10/047;**
G06N 3/0445; G06N 5/003; G06N 7/005

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.08.2020 JP 2020136427**

(71) Applicant: **FUJITSU LIMITED**
**Kanagawa 211-8588 (JP)**

(72) Inventor: **Tomita, Yoshinori**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **EVALUATION FUNCTION GENERATION PROGRAM, EVALUATION FUNCTION GENERATION METHOD, AND INFORMATION PROCESSING APPARATUS**

(57) An evaluation function generation program that causes a computer to execute a process. The process includes specifying a first moving distance in which each of the plurality of mobile objects moves from end time of one task to end time of another task for each of multiple task pairs, based on layout information expressing a movement route in which a plurality of mobile objects is movable in, initial position information indicating an initial position of the plurality of mobile objects, and task information indicating a start position and an end position of a plurality of tasks, specifying a second moving distance of the plurality of mobile objects from the start position to the end position for the plurality of tasks, based on the layout information and the task information, and generating, based on the first moving distance and the second moving distance, an evaluation function of an Ising model.

FIG. 1

**Description**

[Field]

The embodiment discussed herein is related to an evaluation function generation program, an evaluation function generation method, and an information processing apparatus.

[Background Art]

There is an Ising device (also called a Boltzmann machine) that uses an Ising-type evaluation function (also called an energy function or the like) as a device that calculates a large-scale discrete optimization problem which Neumann computers are not good at (see, for example, PTL 1).
In calculation with the Ising device, a problem to be calculated is replaced with an Ising model which is a model representing a spin behavior of a magnetic material. Then, a Markov chain Monte Carlo method such as a simulated-annealing method or a replica exchange method (also called exchange Monte Carlo method) is used to search for a state (an optimal solution) where a value of the Ising model-type evaluation function (corresponding to energy of the Ising model) is minimized. Note that the problem replaced by the Ising model is almost the same as a problem called quadratic unconstrained binary optimization (QUBO) and can be mutually converted, and thus the following description does not distinguish between the two.
In QUBO, an objective function (an object to be minimized) and a constraint term (which becomes a very large value if a constraint condition that should be satisfied by the problem is not satisfied) are individually represented by a quadratic function using a state variable 0 or 1 (+1 or -1 in the Ising model). Then, the sum of these is to be an evaluation function.
Meanwhile, in order to transport a transport target in a shortest time in a factory or the like, there is a proposed method of formulating task assignment to each carrier machine and a movement route by using 0-1 integer programming, and calculating using an existing optimization solver (see, for example, NPL 1).
Note that, in the past, there is a known technique for performing a route search in distribution warehouses, stores, and the like, so as to avoid interference between a plurality of mobile objects (automated carrier machines and customers) (see, for example, PTL 2 and 3).

[Citation List]

[Patent Literature]

[PTL 1] Japanese National Publication of International Patent Application No. 2017-515195.
[PTL 2] Japanese Laid-open Patent Publication No. 2017-134794.
[PTL 3] Japanese Laid-open Patent Publication No. 2013-250941.

[Non Patent Literature]

Ryosuke Nakamura, Kenji Sawada, Seiichi Shin, Kenji Kumagai, and Hisato Yoneda, "Simultaneous Optimization of Dispatching and Routing for OHT Systems via State Space Representation", Transactions of the Society of Instrument and Control Engineers, Vol. 50, No. 4, pp. 210-218, 2014.

[Summary of Invention]

[Technical Problem]

In assigning tasks to a plurality of mobile objects, in a case where a problem of finding assignment with which all tasks are completed in a shortest time is formulated using 0-1 integer programming, the number of variables contained in an expression increases rapidly as a scale of the problem becomes larger. In a real problem, in a case of calculating a problem by using such an expression, a calculation time until obtaining a solution becomes too long since the number of mobile objects and tasks will increase and the scale of the problem will increase.
In one aspect, an object of the embodiment is to provide an evaluation function generation program, an evaluation function generation method, and an information processing apparatus capable of reducing a calculation time of a problem of assigning tasks to a plurality of mobile objects.

[Solution to Problem]

According to an one aspect of the embodiments, an evaluation function generation program that causes a computer to execute a process. The process includes acquiring layout information that expresses a movement route in which a plurality of mobile objects is movable in a directed graph, initial position information that indicates an initial position of the plurality of mobile objects, and task information that indicates a start position and an end position of each of a plurality of tasks; specifying a first moving distance in which each of the plurality of mobile objects moves from end position of one task to end position of another task for each of multiple task pairs included in the plurality of tasks, based on the layout information, the initial position information, and the task information; specifying a second moving distance of each of the plurality of mobile objects from the start position to the end position for each of the plurality of tasks, based on the layout information and the task information; and generating, based on the first moving distance and the second moving distance, an evaluation function of an Ising model obtained by adding, to an objective function, a penalty term based on a sum of squared values of a total of the second moving distance of a task assigned to each of the plurality of mobile objects, the objective function expressing a total moving distance obtained by assigning each of the plurality of tasks to any of the plurality of mobile objects.

[Effects of Invention]

In one aspect, the embodiment is able to reduce a calculation time of a problem of assigning tasks to a plurality of mobile objects.

[Brief Description of Drawings]

FIG. 1 is a diagram illustrating an example of an information processing apparatus and an evaluation function generation method according to a first embodiment;
FIG. 2 is a block diagram illustrating a hardware example of an information processing apparatus according to a second embodiment;
FIG. 3 is a block diagram illustrating a functional example of the information processing apparatus;
FIG. 4 is a view illustrating an example of layout information;
FIG. 5 is a view illustrating an example of a directed graph represented by the layout information;
FIG. 6 is a view illustrating an example of an initial position of a carrier machine;
FIG. 7 is a view illustrating an example of task information;
FIG. 8 is a flowchart illustrating a flow of an example of an evaluation function generation process;
FIG. 9 is a view illustrating an example of a calculation result of a start position pt0[k, r] of each task;
FIG. 10 is a view illustrating an example of a calculation result of an end position pt1[k, r] of each task;
FIG. 11 is a table representing a part of an example of a calculation result of dist(p[i], p[j]);
FIG. 12 is a table representing an example of a calculation result of $dt(k_i, k_j, r)$;
FIG. 13 is a table representing an example of a state variable;
FIG. 14 is a view illustrating an example of a movement route of a task assigned to a carrier machine with a carrier machine number r = 1;
FIG. 15 is a view illustrating an example of a movement route of a task assigned to a carrier machine with a carrier machine number r = 2; and
FIG. 16 is a view illustrating an example of a movement route of a task assigned to a carrier machine with a carrier machine number r = 4.

[Description of Embodiments]

Hereinafter, modes for carrying out the embodiment will be described with reference to the drawings.

[First Embodiment]

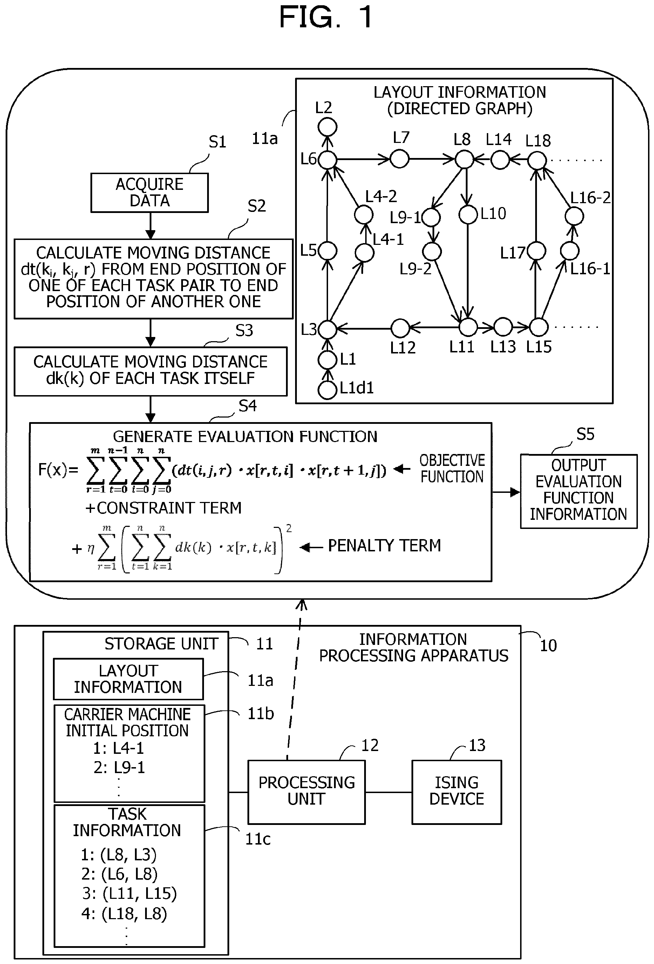

FIG. 1 is a diagram illustrating an example of an information processing apparatus and an evaluation function generation method according to a first embodiment.
An information processing apparatus 10 of the first embodiment generates a QUBO evaluation function (an Ising type evaluation function) that models a problem of finding assignment with which all tasks are completed in a shortest time, when assigning n pieces of task to m pieces of carrier machine, which is an example of a plurality of mobile objects. Note that, in the following example, it is assumed that, after completing the assigned task, each carrier machine returns to an initial position that is same as an initial position where the movement has been started, but the embodiment is not limited to this.

The information processing apparatus 10 includes a storage unit 11, a processing unit 12, and an Ising device 13.

The storage unit 11 is, for example, a volatile storage device that is an electronic circuit such as a random access memory (RAM), or a non-volatile storage device that is an electronic circuit such as a hard disk drive (HDD) or a flash memory.

The storage unit 11 stores a program for performing processing described later, and stores layout information 11a, initial position information 11b indicating an initial position of a carrier machine (a mobile object), and task information 11c.

The layout information 11a is information that represents, for example, a movement route that on which m pieces of carrier machine can move in a factory, in a directed graph. FIG. 1 indicates an example of a directed graph included in the layout information 11a. Each node in the directed graph represents a position, and each arrow is a directed branch (hereinafter referred to as an edge), which represents a route and a moving direction. "L1", "L2", and the like in FIG. 1 represent node names. Note that the layout information 11a also contains information on a length of each edge (which may be called a weight of the edge). In the following example, a description will be given with an assumption that the length of each edge is 1.

The initial position information 11b contains information indicating an initial position of the m pieces of carrier machine. The example of FIG. 1 illustrates that an initial position of a first carrier machine (a carrier machine number 1) among the m pieces of carrier machine is a node with a node name "L4-1", and an initial position of a second carrier machine (a carrier machine number 2) is a node with a node name "L9-1".

The task information 11c contains a start position and an end position of each of the n pieces of task. The start position is, for example, a position where the carrier machine receives a package, and the end position is, for example, a position where the carrier machine delivers the package. In the example of FIG. 1, among the n pieces of task, a first task (a task number 1) is a task having a node with a node name "L8" as the start position and a node with a node name "L3" as the end position. A second task (a task number 2) is a task having a node with a node name "L6" as the start position and the node with the node name "L8" as the end position. A third task (a task number 3) is a task having a node with a node name "L11" as the start position, and a node with a node name "L15" as the end position. A fourth task (a task number 4) is a task having a node with a node name "L18" as the start position, and the node with the node name "L8" as the end position.

Furthermore, the storage unit 11 may store various control parameters of the Ising device 13.

The various data described above stored in the storage unit 11 may be inputted from outside the information processing apparatus 10, or may be, for example, generated in the information processing apparatus 10 on the basis of data inputted through an operation on an input device (not illustrated) by a user.

The processing unit 12 is implemented by a processor that is hardware such as a central processing unit (CPU), a graphics processing unit (GPU), and a digital signal processor (DSP). Note that, the processing unit 12 may include an electronic circuit such as an application specific integrated circuit (ASIC), a field programmable gate array (FPGA), or the like. The processing unit 12 executes a program stored in the storage unit 11 to cause the information processing apparatus 10 to perform processing shown below. Note that the processing unit 12 may be a set of a plurality of processors.

The processing unit 12 acquires the layout information 11a, the initial position information 11b, and the task information 11c from, for example, the storage unit 11 (step S1).

Then, the processing unit 12 calculates $dt(k_i, k_j, r)$ on the basis of the layout information 11a, the initial position information 11b, and the task information 11c (step S2). The $dt(k_i, k_j, r)$ is a moving distance carrier machine r from end position of one task $k_i$ to end position of another task $k_j$, where r is came from m pieces of carrier machine, and $k_i$ $k_j$ are came for each of multiple task pairs included in the n pieces of task.

In the process of step S2, the processing unit 12 may include, into the task described above, a task having an initial position of each of the m pieces of carrier machine as the start position and the end position (hereinafter referred to as dummy task), to calculate a moving distance (in this case, the number of tasks is to be n + m). Therefore, it is possible to shorten a calculation formula for a total moving distance (which is an objective function described later) of the m pieces of carrier machine.

In the process of step S2, the processing unit 12 first obtains a start position pt0[k, r] of each task on the basis of the task information 11c. k represents a task number and r represents a carrier machine number. In the following, when the dummy task is used, it is assumed that k = 0 is the task number of the dummy task. For example, pt0[0, r] indicates an initial position of a carrier machine with a carrier machine number r, and pt0[1, r] indicates a start position of a task with a task number k = 1. When the initial position information 11b as illustrated in FIG. 1 is used, pt0[0, 1] indicates the node with the node name "L4-1". When the task information 11c as illustrated in FIG. 1 is used, pt0[1, 1] indicates the node with the node name "L8". Note that, in a case of k = 1 to n, in other words, $k \neq 0$, pt0[k, r] does not depend on a value of the carrier machine number r.

In the process of step S2, next, the processing unit 12 obtains an end position pt1[k, r] of each task on the basis of the task information 11c. When the dummy task is used, for example, pt1[0, r] indicates an initial position of the carrier machine with the carrier machine number r, and pt1[1, r] indicates an end position of the task with the task number k = 1. When the initial position information 11b as illustrated in FIG. 1 is used, pt1[0, 1] indicates the node with the node name "L4-1". When the task information 11c as illustrated in FIG. 1 is used, pt1[1, 1] indicates the node with the node name "L3". Note that, in a case of k = 1 to n, in other words, k≠0, pt1[k, r] does not depend on a value of the carrier machine number r. Furthermore, when each carrier machine returns to an initial position different from the initial position where the movement has been started after completing an assigned task (when the initial position and the end position are different), pt1[0, r] is to indicate the end position of the carrier machine of the carrier machine number r.

In the process of step S2, the processing unit 12 further calculates a distance dist(p[i], p[j]) on the basis of the layout information 11a. dist(p[i], p[j]) is a distance from each node p[i] included in the directed graph to another node p[j] included in the directed graph. The processing unit 12 may obtain dist(p[i], p[j]) as a shortest distance from the node p[i] to the node p[j] by using, for example, Dijkstra's algorithm or the like.

For example, a distance from a node with a node name "L1d1" to a node with a node name "L1" is 1. A distance from the node with the node name "L1d1" to a node with a node name "L2" is 5. A distance from the node with the node name "L1d1" to the node with the node name "L3" is 2. The node with the node name "L1" cannot reach the node with the node name "L1d1" because there is no edge. A distance between such nodes that do not have a reachable route is set to a very large value, for example.

Note that dist(p[i], p[j]) may be calculated in advance by another information processing apparatus or the like, or may be contained in the layout information 11a.

Then, in the process of step S2, the processing unit 12 calculates $dt(k_i, k_j, r)$ for all $k_i$, $k_j$, and r on the basis of the following Formula (1).

[Formula 1]

$$dt(k_i, k_j, r) = dist(pt1[k_i, r], pt0[k_j, r]) \\ + dist(pt0[k_j, r], pt1[k_j, r]) \qquad (1)$$

In Formula (1), $dist(pt1[k_i, r], pt0[k_j, r])$ is a moving distance of the carrier machine of the carrier machine number r, from an end position of a task with a task number k = i (or an initial position of the carrier machine with the carrier machine number r) to a start position of a task with a task number k = j. $dist(pt0[k_j, r], pt1[k_j, r])$ is a moving distance of the carrier machine with the carrier machine number r, from the start position of the task with the task number k = j to an end position of the task with the task number k = j.

For example, in a case of $k_i = 0$, $k_j = 2$, and r = 1, dt(0, 2, 1) = dist(pt1[0, 1], pt0[2, 1]) + dist(pt0[2, 1], Pt1[2, 1]) is satisfied. pt1[0, 1] is the node with the node name "L4-1", which is an initial position of a carrier machine with a carrier machine number r = 1, and pt0[2, 1] is the node with the node name "L6", which is a start position of a task with a task number k = 2. Therefore, dist(pt1[0, 1], pt0[2, 1]) is a moving distance from the node with the node name "L4-1" to the node with the node name "L6", which is 2. Furthermore, pt1[2, 1] is the node with the node name "L8", which is an end position of the task with the task number k = 2. Therefore, dist(pt0[2, 1], pt1[2, 1]) is a moving distance from the node with the node name "L6" to the node with the node name "L8", which is 2. Therefore, dt(0, 2, 1) = 2 + 2 = 4 is satisfied.

For example, in a case of $k_i = 1$, $k_j = 3$, and r = 1, dt(1, 3, 1) = dist(pt1[1, 1], pt0[3, 1]) + dist(pt0[3, 1], Pt1[3, 1]) is satisfied. pt1[1, 1] is the node with the node name "L3", which is an end position of the task with the task number k = 1, and pt0[3, 1] is the node with the node name "L11", which is a start position of a task with a task number k = 3. Therefore, dist(pt1[1, 1], pt0[3, 1]) is a moving distance from the node with the node name "L3" to the node with the node name "L11". A route that is to be a shortest distance from the node with the node name "L3" to the node with the node name "L11" is "L3" → "L5" → "L6" → "L7" → "L8" → "L10" → "L11", and a moving distance is 6. Furthermore, pt1[3, 1] is a node with a node name "L15", which is an end position of the task with the task number k = 3. Therefore, dist(pt0[3, 1], pt1[3, 1]) is a moving distance from the node with the node name "L11" to the node with the node name "L15", which is 2. Therefore, dt(1, 3, 1) = 6 + 2 = 8 is satisfied.

After the process of step S2, the processing unit 12 calculates a moving distance dk(k) from a start position to an end position of each task, for each of the n pieces of task, on the basis of the layout information 11a and the task information 11c (step S3). Note that dk(k) is the same value (not depending on a value of the carrier machine number r) for each of the m pieces of carrier machine.

The processing unit 12 calculates dk(k) for all pieces of k, for example, on the basis of the following Formula (2).

[Formula 2]

$$dk(k) = dist(pt0[k, 1], pt1[k, 1]) \qquad (2)$$

In a case of k = 1, dk(1) = dist(pt0[1, 1], pt1[1, 1]) is to be satisfied. dist(pt0[1, 1], pt1[1, 1]) is a moving distance from the node with the node name "L8" to the node with the node name "L3". A route that is to be a shortest distance from the node with the node name "L8" to the node with the node name "L3" is "L8" $\to$ "L10" $\to$ "L11" $\to$ "L12" $\to$ "L3", and the moving distance is 4. Therefore, dk(1) = 4 is satisfied.

Note that, in a case where the shortest distances between individual nodes are obtained in advance, for example, as the layout information 11a, a processing order of step S2 and step S3 may be interchanged.

Thereafter, the processing unit 12 generates an Ising type (QUBO) evaluation function on the basis of dt($k_i$, $k_j$, r) calculated in the process of step S2 and dk(k) calculated in the process of step S3 (step S4).

The evaluation function contains an objective function that expresses a total moving distance obtained by assigning the n pieces of task to any of the m pieces of carrier machine, a constraint term that represent a constraint condition that should be satisfied by the problem, and a penalty term.

The objective function is represented by a quadratic expression for state variables (x[r, t, i] and x[r, t + 1, j]), as in the following Formula (3).

[Formula 3]

$$\sum_{r=1}^{m} \sum_{t=0}^{n-1} \sum_{i=0}^{n} \sum_{j=0}^{n} (dt(i, j, r) \cdot x[r, t, i] \cdot x[r, t+1, j]) \qquad (3)$$

In Formula (3), among dt($k_i$, $k_j$, r) calculated in the process of step S2, dt(i, j, r) is a moving distance in a case of $k_i$ = i and $k_j$ = j.

In Formula (3), x[r, t, i] is a state variable indicating whether or not the carrier machine with the carrier machine number r executes the task with the task number k = i at certain time t. x[r, t + 1, j] is a state variable indicating whether or not the carrier machine with the carrier machine number r executes the task with the task number k = j at time t + 1. x[r, t, i] and x[r, t + 1, j] take a value of 0 or 1. In a case of x[r, t, i] = 0, it is indicated that the carrier machine with the carrier machine number r does not execute the task with the task number k = i at the time t. In a case of x[r, t, i] = 1, it is indicated that the carrier machine executes the task with the task number k = i at the time t. In a case of x[r, t + 1, j] = 0, it is indicated that the carrier machine with the carrier machine number r does not execute the task with the task number k = j at the time t + 1. In a case where x[r, t + 1, j] = 1, it is indicated that the carrier machine executes the task with the task number k = j at the time t + 1.

In a case where x[r, t, i] and x[r, t + 1, j] are both 1, the total moving distance is added with the moving distance dt(i, j, r) of the carrier machine r from end position of the task with the task number k = i to end position of the task with the task number k = j. In a case where either x[r, t, i] or x[r, t + 1, j] is 0, the moving distance dt(i, j, r) is not to be added to the total moving distance.

Note that the time t is not clock time but an integer that takes a value from 0 to n - 1, and means an execution order of tasks in each carrier machine. Therefore, even if two carrier machines have the save time t, a clock time may be different for the two carrier machines. The time t = 0 is time when the carrier machine is at the initial position, which can also be said to be time when the carrier machine is executing the dummy task.

The constraint term will be described later (see Formulas (6), (8), (10) to (12), and (14) described later).

The penalty term is expressed by the following Formula (4).

[Formula 4]

$$\eta \sum_{r=1}^{m} \left( \sum_{t=1}^{n} \sum_{k=1}^{n} dk(k) \cdot x[r, t, k] \right)^2 \qquad (4)$$

In Formula (4), $\eta$ is a predetermined constant value, and may be appropriately changed in accordance with a calculation result and the like. Formula (4) is to be a value obtained by multiplying, by $\eta$, a sum of a squared values of a sum of dk[k] of a task assigned to each of the m pieces of carrier machine.

When the n pieces of task are assigned to the m pieces of carrier machine, in a case of generating an evaluation function that models a problem of finding assignment with which all tasks are completed in a shortest time, the objective function in Formula (3) alone is not enough. This is because, although the objective function described above expresses the total moving distance, assignment of the task that minimizes the total moving distance is not necessarily the assignment with which all tasks are completed in a shortest time.

Whereas, the penalty term expressed by Formula (4) is to be a value that depends on a maximum value of the moving distance among the respective moving distances of the m pieces of carrier machine. By searching for the task assignment that reduces the maximum value of the moving distance, it becomes easier to obtain a solution that may shorten time for completing all tasks. Therefore, the evaluation function is generated so as to contain the penalty term as described above.

Note that, when len (r = 1) is set as a moving distance of the carrier machine with the carrier machine number r = 1, a sum of squares of each moving distance is to be $(len (r = 1))^2 + (len (r = 2))^2 + (len (r = 3))^2 + (len (r = 4))^2$, in a case of m = 4. However, if such a term is used as the penalty term, the order will be fourth, which does not conform to QUBO, quadratic. Therefore, by expressing the moving distance of each carrier machine with the moving distance of the task itself without considering the moving distance to the start position of each task of each carrier machine, the moving distance of each carrier machine may be approximated by a linear expression, and the penalty term may conform to by QUBO.

After the process of step S4, the processing unit 12 outputs evaluation function information (step S5).

In the process of step S5, the processing unit 12 obtains a coefficient of a first-order term (which becomes a vector), a coefficient of a second-order term (which becomes a matrix), and a constant term of the state variable based on the generated evaluation function, and outputs these as the evaluation function information (QUBO problem data). For example, the processing unit 12 may output the evaluation function information to the Ising device 13, or may output to the storage unit 11 to store. Furthermore, the processing unit 12 may output (transmit) the evaluation function information to a device external to the information processing apparatus 10.

The Ising device 13 searches for task assignment (a value of each state variable) that minimizes a value of the evaluation function based on the QUBO problem data.

The Ising device 13 is, for example, a device that performs the search described above by performing a Markov chain Monte Carlo method such as a simulated-annealing method or a replica exchange method by using a digital circuit. Furthermore, the Ising device 13 may be a device that performs the search described above by performing quantum annealing by using a superconductive circuit, or may be a processor such as a CPU, a GPU, or a DSP that performs the search described above by executing software.

Furthermore, the processing unit 12 may perform the search described above, without providing the Ising device 13.

According to the information processing apparatus 10 and the evaluation function generation method of the first embodiment as described above, in assigning tasks to a plurality of mobile objects, the problem of finding assignment with which all tasks are completed in a shortest time is modeled in the QUBO evaluation function including the penalty term as described above.

Since QUBO has a high-speed solution method for multivariable problems such as various Ising devices, the calculation time may be shortened as compared with a case of using the 0-1 integer programming even if the scale of the problem becomes large, by making it possible to model the problem into the QUBO evaluation function as described above.

[Second Embodiment]

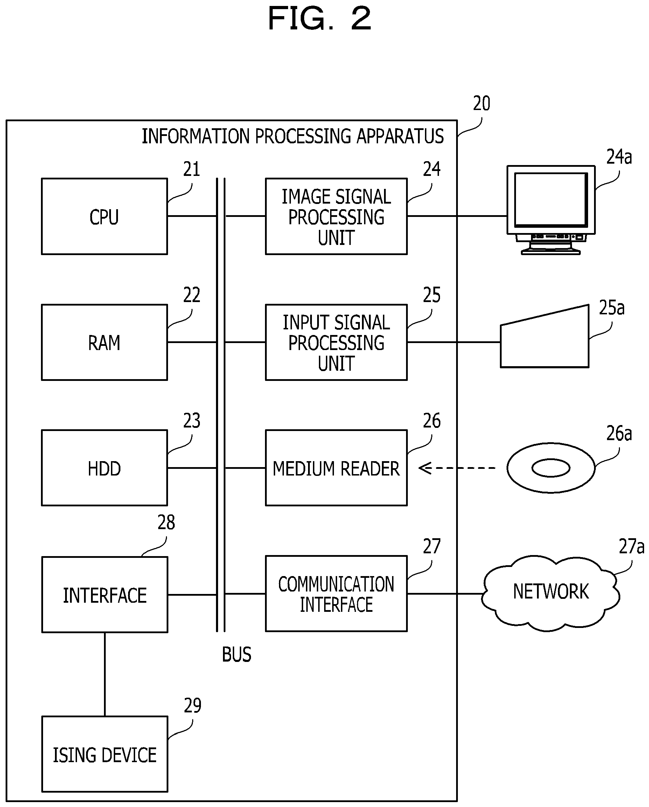

FIG. 2 is a block diagram illustrating a hardware example of an information processing apparatus according to a second embodiment.

An information processing apparatus 20 is, for example, a computer, and includes a CPU 21, a RAM 22, an HDD 23, an image signal processing unit 24, an input signal processing unit 25, a medium reader 26, a communication interface 27, and an interface 28. The units described above are connected to a bus.

The CPU 21 is a processor including an arithmetic circuit that executes program instructions. The CPU 21 loads at least part of programs and data stored in the HDD 23 into the RAM 22 to execute programs. Note that the CPU 21 may include a plurality of processor cores, the information processing apparatus 20 may include a plurality of processors, and processes described below may be executed in parallel using the plurality of processors or processor cores.

The RAM 22 is a volatile semiconductor memory that temporarily stores programs executed by the CPU 21 and data used by the CPU 21 for arithmetic operations. Note that the information processing apparatus 20 may include a memory of a type different from the RAM, or a plurality of memories.

The HDD 23 is a non-volatile storage device that stores programs of software such as an operating system (OS), middleware, and application software, and data. The program includes, for example, a program that causes the information processing apparatus 20 to execute a process of generating an evaluation function. Note that the information processing apparatus 20 may include other types of storage devices such as a flash memory and a solid state drive (SSD), and may include a plurality of non-volatile storage devices.

The image signal processing unit 24 outputs an image to a display 24a connected to the information processing apparatus 20 in accordance with an instruction from the CPU 21. As the display 24a, a cathode-ray tube (CRT) display, a liquid crystal display (LCD), a plasma display panel (PDP), an organic electro-luminescence (OEL) display, an organic light-emitting diode (OLED) display, or the like may be used.

The input signal processing unit 25 acquires an input signal from an input device 25a connected to the information processing apparatus 20, and outputs the input signal to the CPU 21. As the input device 25a, a pointing device such as a mouse, a touch panel, a touch pad, and a trackball, a keyboard, a remote controller, and a button switch, and the like may be used. Furthermore, a plurality of types of input devices may be connected to the information processing apparatus 20.

The medium reader 26 is a reading device that reads a program or data recorded on a recording medium 26a. As the recording medium 26a, for example, a magnetic disk, an optical disk, a magneto-optical disk (MO), a semiconductor memory, or the like may be used. Examples of the magnetic disk include a flexible disk (FD) and an HDD. The optical disc includes a compact disc (CD) and a digital versatile disc (DVD).

The medium reader 26 copies, for example, a program or data read from the recording medium 26a to another recording medium such as the RAM 22 or the HDD 23. The read program is executed by the CPU 21, for example. Note that the recording medium 26a may be a portable recording medium, and may be used for distribution of a program or data. Furthermore, the recording medium 26a and the HDD 23 may be also referred to as a computer-readable recording media.

The communication interface 27 is an interface that is connected to a network 27a and communicates with another information processing apparatus via the network 27a. The communication interface 27 may be a wired communication interface connected by a cable to a communication device such as a switch, or may be a wireless communication interface connected to a base station via a wireless link.

The interface 28 is connected to an Ising device 29, and transmits and receives data between the CPU 21 and the Ising device 29. The interface 28 may be, for example, a wired communication interface such as peripheral component interconnect (PCI) express, or may be a wireless communication interface.

Note that the information processing apparatus 10 illustrated in FIG. 1 may also be implemented by using the hardware as described above, for example.

The Ising device 29 searches for a value of each state variable that minimizes a value of a QUBO evaluation function on the basis of inputted QUBO problem data. The Ising device 29 is, for example, a device that performs the search described above by performing a Markov chain Monte Carlo method such as a simulated-annealing method or a replica exchange method by using a digital circuit. Furthermore, the Ising device 29 may be a device that performs the search described above by performing quantum annealing by using a superconductive circuit, or may be a processor such as a CPU, a GPU, or a DSP that performs the search described above by executing software.

Note that the Ising device 29 may be provided outside the information processing apparatus 20.

Next, functions and processing procedures of the information processing apparatus 20 will be described.

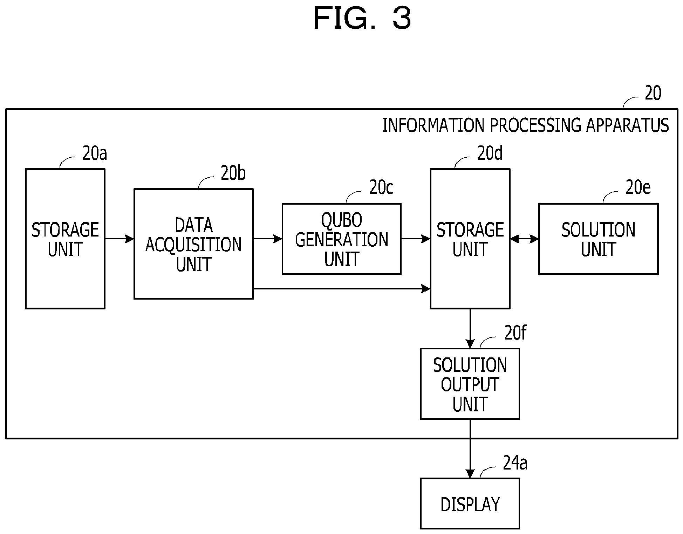

FIG. 3 is a block diagram illustrating a functional example of the information processing apparatus.

The information processing apparatus 20 includes a storage unit 20a, a data acquisition unit 20b, a QUBO generation unit 20c, a control unit 20d, a solution unit 20e, and a solution output unit 20f. The storage unit 20a may be implemented, for example, by using a storage area secured in the RAM 22 or the HDD 23 of FIG. 2. The data acquisition unit 20b, the QUBO generation unit 20c, and the control unit 20d are an example of the processing unit 12 in FIG. 1, and may be implemented using a program module executed by the CPU 21 in FIG. 2, for example. The solution unit 20e may be implemented using the Ising device 29 of FIG. 2, and the solution output unit 20f may be implemented using, for example, the image signal processing unit 24 of FIG. 2.

The storage unit 20a stores, for example, layout information, initial position information of a carrier machine, task information, search end condition information, control parameters of the solution unit 20e, and the like. The control parameters include a parallel search number when the solution unit 20e performs parallel searching, search end condition information, a schedule for changing temperature parameters when the solution unit 20e performs the simulated-annealing method, and the like. Note that the various data described above may be inputted from outside the information processing apparatus 20, or may be, for example, generated in the information processing apparatus 20 on the basis of data inputted through an operation on the input device 25a by a user.

The data acquisition unit 20b acquires various types of information described above, from the storage unit 20a.

The QUBO generation unit 20c generates a QUBO evaluation function based on the layout information, the initial position information of the carrier machine, and the task information, and outputs information of the generated evaluation function. Note that the generated QUBO information may be stored in the storage unit 20a.

The control unit 20d outputs the information of the evaluation function to the solution unit 20e, and controls the solution unit 20e based on various control parameters. Furthermore, the control unit 20d causes the solution output unit 20f to output a solution obtained by the solution unit 20e.

The solution output unit 20f outputs the solution obtained by the solution unit 20e to the display 24a under the control of the control unit 20d. Note that the solution output unit 20f may output the solution to another information processing apparatus or storage device.

Hereinafter, an example of data stored in the storage unit 20a will be described.

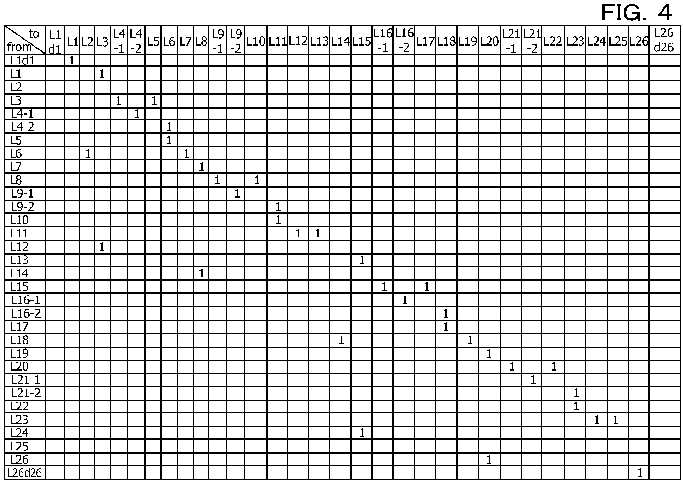

FIG. 4 is a view illustrating an example of layout information.

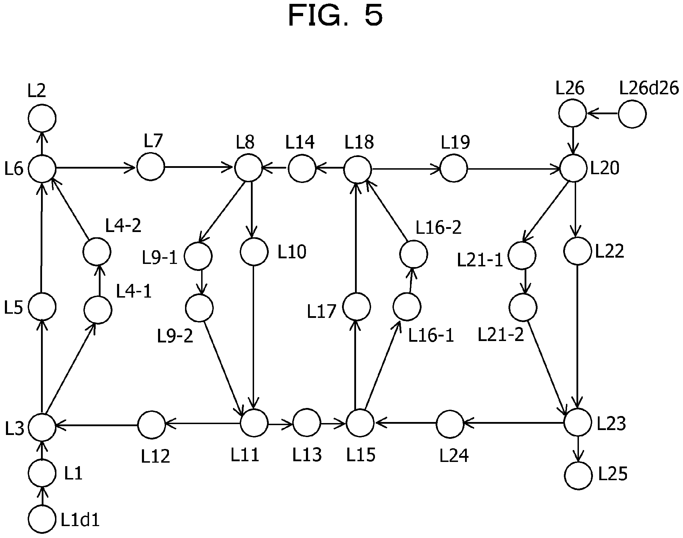

Furthermore, FIG. 5 is a view illustrating an example of a directed graph represented by the layout information.

The layout information representing the directed graph is, for example, table data as illustrated in FIG. 4. A row indicates a node name of a node that is to be a start point of an edge of the directed graph, and a column indicates a node name of a node that is to be an end point of the edge. "1" indicates a length of the edge, and a cell with no value indicates that there is no edge. For example, in a cell of a row of a node name "L1" and a column of a node name "L3", "1" is written, which indicates that there is an edge having a distance of 1 from the node with the node name "L1" to the node with the node name "L3", as illustrated in FIG. 5.

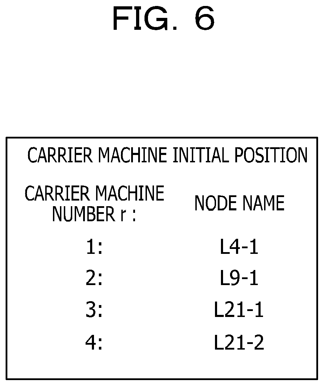

FIG. 6 is a view illustrating an example of an initial position of a carrier machine.

FIG. 6 illustrates an example of initial positions of four carrier machines with carrier machine numbers r = 1 to 4. The initial position is represented by a node name in the directed graph. For example, an initial position of a carrier machine with a carrier machine number r = 1 is a node with a node name "L4-1".

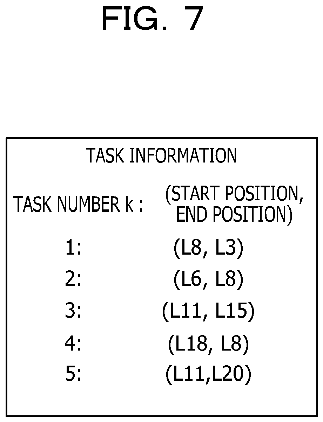

FIG. 7 is a view illustrating an example of task information.

FIG. 7 illustrates an example of information on five tasks with task numbers k = 1 to 5. The information for each task contains a start position and an end position. The start position is, for example, a position where the carrier machine receives a package, and the end position is, for example, a position where the carrier machine delivers the package. For example, a task of k = 5 is a task with a node with a node name "L11" as a start position and a node with a node name "L20" as an end position.

Next, an example of an evaluation function generation process by the information processing apparatus 20 will be described. Note that, in the following, a description is given to an example of generating a QUBO evaluation function that models a problem of assigning each of the five tasks as illustrated in FIG. 7 to any of the four carrier machines at the initial positions as illustrated in FIG. 6, but the number is not limited to this. Furthermore, it is assumed that each carrier machine returns to the initial position when all the assigned tasks are completed.

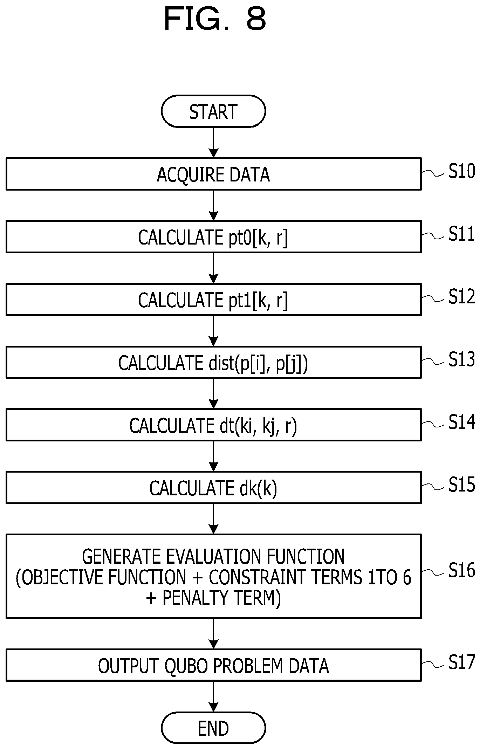

FIG. 8 is a flowchart illustrating a flow of an example of the evaluation function generation process.

The data acquisition unit 20b acquires data including layout information, initial position information of the carrier machine, and task information, which are stored in the storage unit 20a (step S10).

The QUBO generation unit 20c calculates a start position pt0[k, r] of each task on the basis of the initial position of the carrier machine as illustrated in FIG. 6 and the task information as illustrated in FIG. 7 (step S11). The task also includes a dummy task with a task number k = 0.

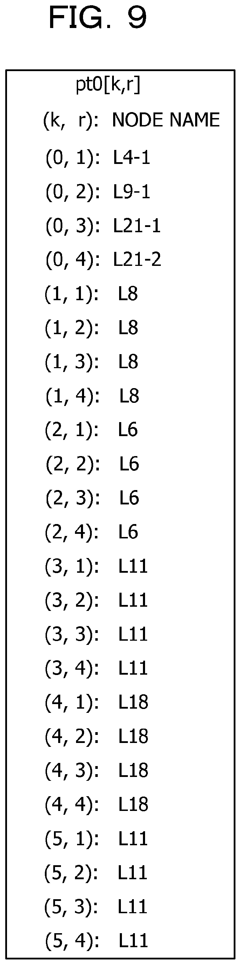

FIG. 9 is a view illustrating an example of a calculation result of the start position pt0[k, r] of each task.

In FIG. 9, pt0[k, r] is represented by a node name. For example, pt0[0, 1] is an initial position of a carrier machine with a carrier machine number 1, and indicates the node with the node name "L4-1". pt0[1, 1], pt0[1, 2], pt0[1, 3], and pt0[1, 4] indicate a node with a node name "L8", which is a start position of a task with a task number k = 1, and does not depend on a value of the carrier machine number r.

The QUBO generation unit 20c calculates an end position pt1[k, r] of each task on the basis of the initial position of the carrier machine as illustrated in FIG. 6 and the task information as illustrated in FIG. 7 (step S12). Again, the task also includes a dummy task with a task number k = 0.

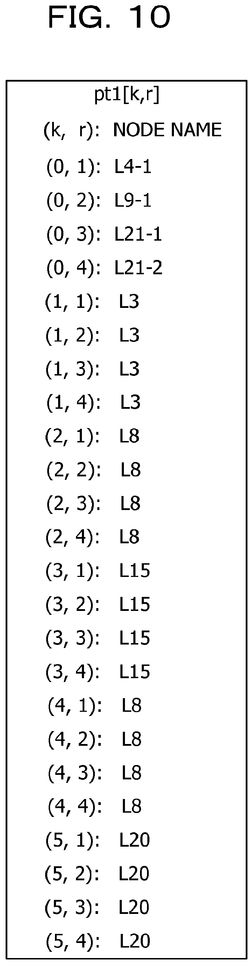

FIG. 10 is a view illustrating an example of a calculation result of the end position pt1[k, r] of each task.

In FIG. 10, pt1[k, r] is represented by a node name. For example, pt1[0, 1] is an initial position (= an end position) of the carrier machine with the carrier machine number 1, and indicates the node with the node name "L4-1". pt1[1, 1], pt1[1, 2], pt1[1, 3], and pt1[1, 4] all indicate the node with the node name "L3", which is an end position of the task with the task number k = 1, and does not depend on a value of the carrier machine number r.

Next, the QUBO generation unit 20c calculates dist(p[i], p[j]) (step S13). dist(p[i], p[j]) is a distance from each node p[i] included in the directed graph to another node p[j] included in the directed graph. The QUBO generation unit 20c may obtain dist(p[i], p[j]) as a shortest distance from the node p[i] to the node p[j] by using, for example, Dijkstra's algorithm or the like.

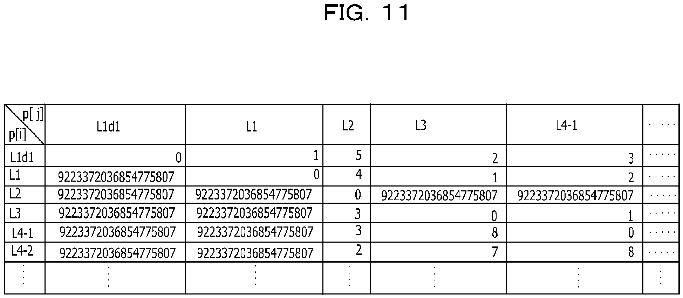

FIG. 11 is a table representing a part of an example of a calculation result of dist(p[i], p[j]).

A distance between nodes having the same node name is 0. Furthermore, for example, the node with the node name "L1" cannot reach the node with the node name "L1d1" because there is no edge. A distance between such nodes is set to a very large value, as illustrated in FIG. 11.

Then, the QUBO generation unit 20c calculates $dt(k_i, k_j, r)$ for all $k_i$, $k_j$, and r, on the basis of the above-described Formula (1) (step S14).

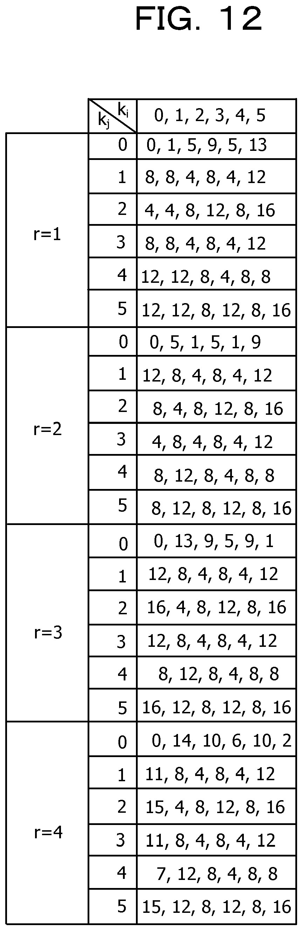

FIG. 12 is a table representing an example of a calculation result of $dt(k_i, k_j, r)$.

For example, in a case of $k_i = 0$, $k_j = 5$, and r = 1, dt(0, 5, 1) = dist(pt1[0, 1], pt0[5, 1]) + dist(pt0[5, 1], Pt1[5, 1]) is satisfied. pt1[0, 1] indicates the node with the node name "L4-1", which is an initial position of the carrier machine with the carrier machine number r = 1, and pt0[5, 1] indicates the node with the node name "L11", which is a start position of the task with the task number k = 5. Therefore, dist(pt1[0, 1], pt0[5, 1]) is a moving distance from the node with the node name "L4-1" to the node with the node name "L11", which is 6. Furthermore, pt1[5, 1] is a node with a node name "L20", which is an end position of the task with the task number k = 5. Therefore, dist(pt0[5, 1], pt1[5, 1]) is a moving distance from the node with the node name "L11" to the node with the node name "L20", which is 6. Therefore, in a case of $k_i = 0$, $k_j = 5$, and r = 1 as illustrated in FIG. 12, dt(0, 5, 1) = 6 + 6 = 12 is satisfied.

Next, the QUBO generation unit 20c calculates dk(k) for all pieces of k (not including k = 0) on the basis of the above-described Formula (2) (step S15).

In a case of k = 1, dk(1) = dist(pt0[1, 1], pt1[1, 1]) is to be satisfied. dist(pt0[1, 1], pt1[1, 1]) is a moving distance from the node with the node name "L8" to the node with the node name "L3". A route that is to be a shortest distance from the node with the node name "L8" to the node with the node name "L3" is "L8" → "L10" → "L11" → "L12" → "L3" from FIG. 5, and the moving distance is 4. Therefore, dk(1) = 4 is satisfied.

In a case of k = 2, dk(2) = dist(pt0[2, 1], pt1[2, 1]) is to be satisfied. dist(pt0[2, 1], pt1[2, 1]) is a moving distance from the node with the node name "L6" to the node with the node name "L8", which is 2 from FIG. 5. Therefore, dk(2) = 2 is satisfied.

In a case of k = 3, dk(3) = dist(pt0[3, 1], pt1[3, 1]) is to be satisfied. dist(pt0[3, 1], pt1[3, 1]) is a moving distance from the node with the node name "L11" to the node with the node name "L15", which is 2 from FIG. 5. Therefore, dk(3) = 2 is satisfied.

In a case of k = 4, dk(4) = dist(pt0[4, 1], pt1[4, 1]) is to be satisfied. dist(pt0[4, 1], pt1[4, 1]) is a moving distance from the node with the node name "L18" to the node with the node name "L8", which is 2 from FIG. 5. Therefore, dk(3) = 2 is satisfied.

In a case of k = 5, dk(5) = dist(pt0[5, 1], pt1[5, 1]) is to be satisfied. dist(pt0[5, 1], pt1[5, 1]) is a moving distance from the node with the node name "L11" to the node with the node name "L20". A route that is to be a shortest distance from the node with the node name "L11" to the node with the node name "L20" is "L11" → "L13" → "L15" → "L17" → "L8" → "L19" → "L20" from FIG. 5, and the moving distance is 6. Therefore, dk(5) = 6 is satisfied.

Thereafter, the QUBO generation unit 20c generates a QUBO evaluation function based on $dt(k_i, k_j, r)$ and dk(k) calculated as described above (step S16).

The objective function is represented by a quadratic expression for state variables (x[r, t, i] and x[r, t + 1, j]), as in the above-described Formula (3). As in the example described above, the state variable contained in the QUBO evaluation function, which models the problem of assigning each of the five tasks to any of the four carrier machines, may be expressed as follows.

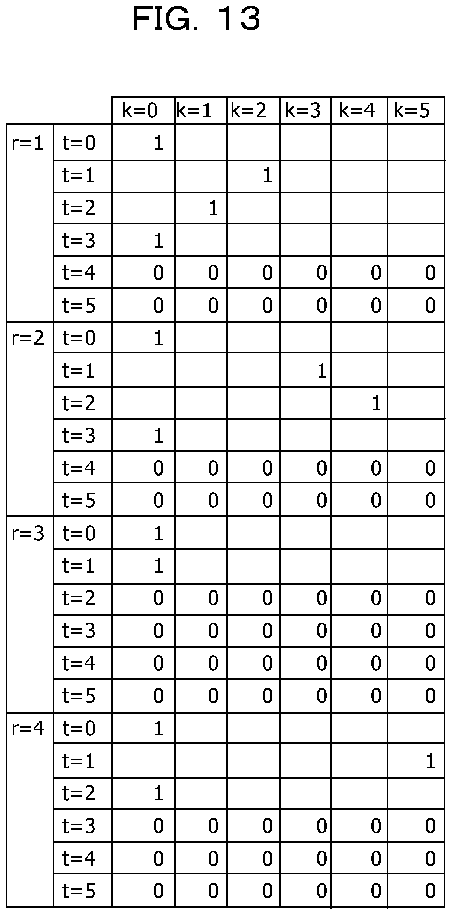

FIG. 13 is a table representing an example of state variables and values.

In FIG. 13, each state variable specified by three parameters of the carrier machine number r, the time t, and the task number k is described as a value of 0 or 1. Note that a cell in which a description of a value is omitted indicates the state variable value is 0.

As can be seen from FIG. 13, the number of state variables may be $6 \times 6 \times 4$ pieces by using the state variables described above. Since a state variable is adopted indicating which task is being executed or not at which time (the execution order) by which carrier machine, the number of state variables may be reduced as compared to a case where the state variables is set in consideration of a movement route. Whether each state variable is set to 0 or 1 is calculated by the solution unit 20e.

In the process of step S16, the QUBO generation unit 20c adds the following constraint term to the evaluation function. The constraint term has a value greater than 0 when a task is assigned that does not meet a condition (a constraint condition) that should be satisfied by the problem.

For example, as the constraint condition, there are the following six.

(Constraint condition 1)

Constraint condition 1 is a condition that a dummy task of k = 0 is executed only twice for every carrier vehicle. This is for satisfying the problem setting that, as described above, the carrier vehicle departs from the initial position, and returns to the initial position again after executing all assigned tasks. Expressing Constraint condition 1 with Formula (5) is as follows.

[Formula 5]

$$r = 1 : \quad \sum_{t=0}^{5} x[1, t, 0] = 2 \qquad (5)$$

$$r = 2 : \quad \sum_{t=0}^{5} x[2, t, 0] = 2$$

$$r = 3 : \quad \sum_{t=0}^{5} x[3, t, 0] = 2$$

$$r = 4 : \quad \sum_{t=0}^{5} x[4, t, 0] = 2$$

From Formula (5), Constraint term 1 representing Constraint condition 1 may be expressed by the following Formula (6).
[Formula 6]

$$\alpha \sum_{r=1}^{4} \left( \sum_{t=0}^{5} x[r, t, 0] - 2 \right)^2 \qquad (6)$$

In Formula (6), $\alpha$ is a predetermined constant value, to which a relatively large value is set. Constraint term 1 becomes 0 when Constraint condition 1 for r = 1 to 4 as shown in Formula (5) is satisfied, and will be a relatively large value greater than 0 when Constraint condition 1 is not satisfied.

(Constraint condition 2)

Constraint condition 2 is a condition that the number of executions of each task is 1. Expressing Constraint condition 2 with Formula (7) is as follows.
[Formula 7]

$$\sum_{r=1}^{4}\sum_{t=1}^{5} x[r,t,1] = 1 \tag{7}$$

$$\sum_{r=1}^{4}\sum_{t=1}^{5} x[r,t,2] = 1$$

$$\sum_{r=1}^{4}\sum_{t=1}^{5} x[r,t,3] = 1$$

$$\sum_{r=1}^{4}\sum_{t=1}^{5} x[r,t,4] = 1$$

$$\sum_{r=1}^{4}\sum_{t=1}^{5} x[r,t,5] = 1$$

Constraint condition 2 indicates that a total value of each column of k = 1 to 5 is 1, in state variables arranged in a matrix as in FIG. 13.

From Formula (7), Constraint term 2 representing Constraint condition 2 may be expressed by the following Formula (8).

[Formula 8]

$$\beta \sum_{k=1}^{5}\left(\sum_{r=1}^{4}\sum_{t=1}^{5} x[r,t,k] - 1\right)^{2} \tag{8}$$

In Formula (8), $\beta$ is a predetermined constant value, to which a relatively large value is set. Constraint term 2 becomes 0 when Constraint condition 2 as shown in Formula (7) is satisfied, and will be a relatively large value greater than 0 when Constraint condition 2 is not satisfied.

(Constraint condition 3)

Constraint condition 3 is a condition that the number of tasks executed by each carrier machine at certain time is 0 or 1. Constraint condition 3 can be said that the following Formula (9) is 0 or 1 for all of r = 1, 2, 3, 4 and t = 1, 2, 3, 4, 5.

[Formula 9]

$$\sum_{k=1}^{5} x[r,t,k] \tag{9}$$

When Formula (9) is expressed as M, Constraint condition 3 may be expressed as M (M-1) = 0. Constraint condition 3 indicates that a total value of each row is 0 or 1, in state variables arranged in a matrix as in FIG. 13. Constraint term 3 representing Constraint condition 3 may be expressed by the following Formula (10).

[Formula 10]

$$\gamma \sum_{r=1}^{4} \sum_{t=1}^{5} \left( \left( \sum_{k=1}^{5} x[r,t,k] \right) \cdot \left( \left( \sum_{k=1}^{5} x[r,t,k] \right) - 1 \right) \right) \quad (10)$$

In Formula (10), $\gamma$ is a predetermined constant value, to which a relatively large value is set. Constraint term 3 becomes 0 when Constraint condition 3 as described above is satisfied, and will be a relatively large value greater than 0 when Constraint condition 3 is not satisfied.

(Constraint condition 4)

Constraint condition 4 is a condition that each carrier machine does not execute a task after returning to the initial position. Constraint condition 4 is x[r, te, 0] = 1 when te ($\neq$ 0) is time when the carrier machine with the carrier machine number r returns to the initial position, and is x[r, t, k] =0 when te < t is satisfied. Constraint term 4 representing Constraint condition 4 may be expressed by the following Formula (11).
[Formula 11]

$$\delta \sum_{r=1}^{4} \left( \sum_{t1=1}^{5} \left( x[r,t1,0] \cdot \left( \sum_{t2=t1+1}^{5} \sum_{k=1}^{5} x[r,t2,k] \right) \right) \right) \quad (11)$$

In Formula (11), $\delta$ is a predetermined constant value, to which a relatively large value is set. Constraint term 4 becomes 0 when Constraint condition 4 as described above is satisfied, and will be a relatively large value greater than 0 when Constraint condition 4 is not satisfied.

(Constraint condition 5)

Constraint condition 5 is a condition that each carrier machine is at the initial position when t = 0 is satisfied. Constraint condition 4 indicates that x[1, 0, 0] = 1, x[2, 0, 0] = 1, x[3, 0, 0] = 1, and x[4, 0, 0] = 1 are satisfied. Constraint term 5 representing Constraint condition 5 may be expressed by the following Formula (12).
[Formula 12]

$$\epsilon \sum_{r=1}^{4} (x[r,0,0] - 4)^2 \quad (12)$$

In Formula (12), $\epsilon$ is a predetermined constant value, to which a relatively large value is set. Constraint term 5 becomes 0 when Constraint condition 5 as described above is satisfied, and will be a relatively large value greater than 0 when Constraint condition 5 is not satisfied.

(Constraint condition 6)

Constraint condition 6 is a condition to prevent an occurrence of a situation in which no task is executed at time before execution time of a task to be executed last by each carrier machine, among assigned tasks. That is, for example, Constraint condition 6 is a condition to cause a row with only 0 to gather at the end of rows for each carrier machine r = 1 to 4, as illustrated in FIG. 13 and prevent the row with only 0 from being inserted in the middle for each carrier machine, for example, in state variables arranged in a matrix as in FIG. 13. This is because when the row with only 0 is inserted in the middle, a value of the objective function becomes sharply small, and the total moving distance can no longer be calculated correctly.

In the state variables arranged in a matrix as in FIG. 13, a sum S[t] of values of the state variables in a row of certain time t may be expressed by the following Formula (13).
[Formula 13]

$$S[t] = \sum_{k=0}^{5} x[r, t, k] \tag{13}$$

In a case where a sum S[t-1] of the state variable values of a row of time t-1 is 0 and the sum S[t] of the state variables of the row of the time t is 1, in other words (1-S[t-1]) S[t] = 1, it is indicated that the row with only 0 is to be inserted in the middle. Therefore, it suffices that (1-S[t-1]) S[t] = 0 is satisfied as Constraint condition 6 for each time t. Constraint term 6 representing Constraint condition 6 may be expressed by the following Formula (14).
[Formula 14]

$$\zeta \sum_{r=1}^{4} \sum_{t=1}^{5} \left( 1 - \sum_{k=0}^{5} x[r, t-1, k] \right) \left( \sum_{k=0}^{5} x[r, t, k] \right) \tag{14}$$

In Formula (14), $\zeta$ is a predetermined constant value, to which a relatively large value is set. Constraint term 6 becomes 0 when Constraint condition 6 as described above is satisfied, and will be a relatively large value greater than 0 when Constraint condition 6 is not satisfied.

The penalty term is expressed by the above-described Formula (4).

The QUBO evaluation function is a function in which the six constraint terms described above and the penalty term are added to the objective function.

After processing in step S16, the QUBO generation unit 20c outputs QUBO problem data (step S17).

The QUBO generation unit 20c obtains a coefficient of a first-order term (which becomes a vector), a coefficient of a second-order term (which becomes a matrix), and a constant term of the state variable on the basis of the generated evaluation function, and outputs these as the QUBO problem data. The QUBO problem data outputted by the QUBO generation unit 20c may be outputted to the solution unit 20e by the control unit 20d, or may be outputted to the storage unit 20a and stored. Furthermore, the QUBO generation unit 20c may output (transmit) the QUBO problem data to a device external to the information processing apparatus 20.

Note that the processing flow illustrated in FIG. 8 is an example, and the processing order may be changed as appropriate. For example, the processing order of steps S14 and S15 may be interchanged.

Furthermore, the QUBO generation unit 20c may store the calculation results obtained in each of the processes of steps S11 to S15, in the storage unit 20a.

When the solution unit 20e receives the QUBO problem data from the control unit 20d, the solution unit 20e searches for a value of each state variable that minimizes a value of the evaluation function under the control of the control unit 20d, and outputs a search result as a solution. For example, the solution illustrated in FIG. 13 is obtained.

Expressing this solution on a directed graph is as follows.

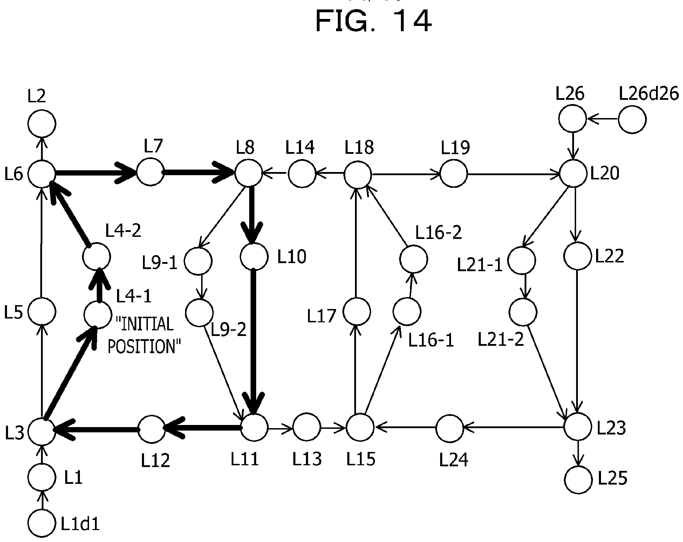

FIG. 14 is a view illustrating an example of a movement route of a task assigned to the carrier machine with the carrier machine number r = 1.

As illustrated in FIG. 13, the carrier machine with the carrier machine number r = 1 executes the task with the task number k = 2 at the time t = 1, and executes the task with the task number k = 1 at the time t = 2. Therefore, as illustrated in FIG. 14, when a movement route of the carrier machine with the carrier machine number r = 1 is represented by the node name, "L4-1" → "L4-2" → "L6" → "L7" → "L8" → "L10" → "L11" → "L12" → "L3" → "L4-1" is obtained. Therefore, the moving distance is 9.

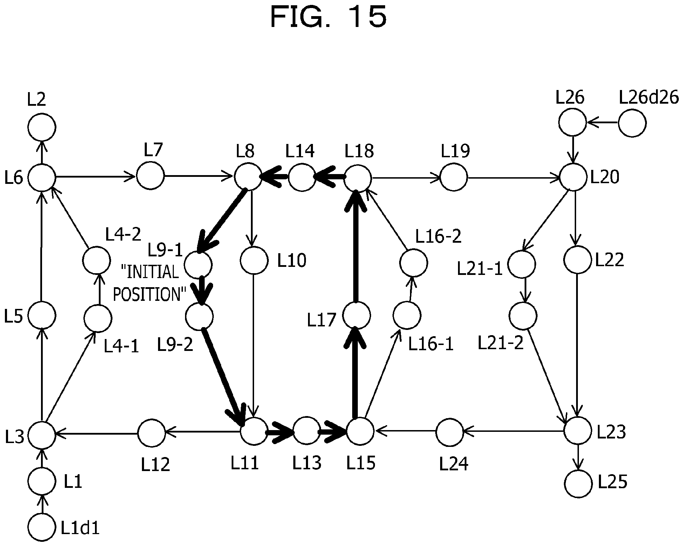

FIG. 15 is a view illustrating an example of a movement route of a task assigned to a carrier machine with a carrier machine number r = 2.

As illustrated in FIG. 13, the carrier machine with the carrier machine number r = 2 executes the task with the task number k = 3 at the time t = 1, and executes the task with the task number k = 4 at the time t = 2. Therefore, as illustrated in FIG. 15, when a movement route of the carrier machine with the carrier machine number r = 2 is represented by the node name, "L9-1" → "L9-2" → "L11" → "L13" → "L15" → "L17" → "L18" → "L14" → "L8" → "L9-1" is obtained. Therefore, the moving distance is 9.

As illustrated in FIG. 13, no task is assigned to a carrier machine with a carrier machine number r = 3. Therefore, the moving distance of the carrier machine with the carrier machine number r = 3 is 0.

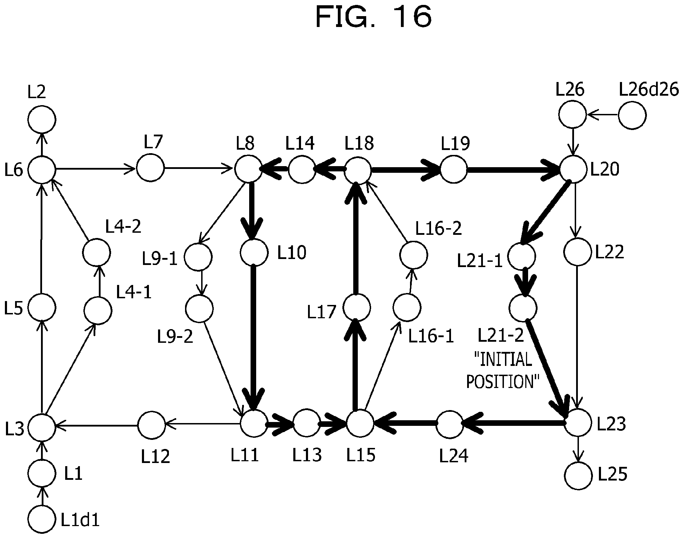

FIG. 16 is a view illustrating an example of a movement route of a task assigned to a carrier machine with a carrier machine number r = 4.

As illustrated in FIG. 13, the carrier machine with the carrier machine number r = 4 executes the task with the task number k = 5 at the time t = 1. Therefore, as illustrated in FIG. 16, when a movement route of the carrier machine with the carrier machine number r = 4 is represented by the node name, the following is obtained. The movement route is to be "L21-2" → "L23" → "L24" → "L15" → "L17" → "L18" → "L14" → "L8" → "L10" → "L11" → "L13" → "L15" → "L17" → "L18" → "L19" → "L20" → "L21-1" → "L21-2". Therefore, the moving distance is 17.

Therefore, the time at which all tasks are completed is the time corresponding to the moving distance of the carrier machine with the carrier machine number r = 4.

According to the information processing apparatus 20 and the evaluation function generation method of the second embodiment as described above, an effect similar to that of the information processing apparatus 10 and the evaluation function generation method of the first embodiment may be obtained. In other words, for example, the calculation time may be shortened as compared with the case of using the 0-1 integer programming. Furthermore, various constraint conditions may be expressed by quadratic expressions for the state variables x[r, t, k] as described above, and may be added as a constraint term of the QUBO evaluation function.

Note that, in the description above, a description on a case where there are multiple shortest routes in calculation of dist(p[i], p[j]) is omitted. In that case, it is sufficient to add, to the evaluation function, a constraint term indicating a constraint condition (called 1-hot constraint condition) that a task is duplicated for the number of multiple shortest routes, and only one is selected from the duplicated tasks.

Furthermore, in the explanation described above, a description has been made with, as an example, the problem of finding assignment with which all tasks are completed in a shortest time in assigning tasks to a plurality of carrier machines, which is an example of a plurality of mobile objects, but the embodiment is not limited to this. For example, it is possible to also apply to a problem of dispatching a plurality of taxis or the like, which is another example of a plurality of mobile objects. In that case, the layout information is to be map information represented by a directed graph, the mobile object is to be a taxi, and the task is to be represented by a position where a customer gets on and a position where the customer gets off.

Furthermore, as described above, the processing contents described above may be realized by causing the information processing apparatus 20 to execute a program.

The program may be recorded on a computer-readable recording medium (for example, the recording medium 26a). As the recording medium, for example, a magnetic disk, an optical disk, a magneto-optical disk, a semiconductor memory, or the like may be used. The magnetic disk includes an FD and an HDD. The optical disk includes a CD, a CD-R (recordable)/RW (rewritable), a DVD, and a DVD-R/RW. The program may be recorded on a portable recording medium and distributed. In this case, the program may be copied from the portable recording medium to another recording medium (for example, the HDD 23) and then executed.

In the foregoing, one aspect of the evaluation function generation program, the evaluation function generation method, and the information processing apparatus of the embodiment has been described on the basis of the embodiments; however, these are only examples and are not limited to the description above.

**Claims**

1. An evaluation function generation program that causes a computer to execute a process, the process comprising:

    acquiring layout information that expresses a movement route in which a plurality of mobile objects is movable in a directed graph, initial position information that indicates an initial position of the plurality of mobile objects, and task information that indicates a start position and an end position of each of a plurality of tasks;
    specifying a first moving distance in which each of the plurality of mobile objects moves from end position of one task to end position of another task for each of multiple task pairs included in the plurality of tasks, based on the layout information, the initial position information, and the task information;
    specifying a second moving distance of each of the plurality of mobile objects from the start position to the end position for each of the plurality of tasks, based on the layout information and the task information; and
    generating, based on the first moving distance and the second moving distance, an evaluation function of an Ising model obtained by adding, to an objective function, a penalty term based on a sum of squared values of a total of the second moving distance of a task assigned to each of the plurality of mobile objects, the objective function expressing a total moving distance obtained by assigning each of the plurality of tasks to any of the plurality of mobile objects.

2. The evaluation function generation program according to claim 1, wherein
the objective function is expressed by a quadratic expression that uses a state variable indicating whether or not each of the plurality of mobile objects executes a certain task at certain time. and

3. The evaluation function generation program according to claim 1, wherein the process further comprising outputting information of the generated evaluation function to an Ising device that searches for assignment of the plurality of tasks to the plurality of mobile objects, wherein the assignment minimizes a value of the evaluation function.

4. The evaluation function generation program according to any one of claims 1 to 3, wherein the specifying includes specifying the first moving distance by including, in the plurality of tasks, a dummy task in which the initial position of each of the plurality of mobile objects is set as the start position and the end position.

5. The evaluation function generation program according to claim 4, wherein the evaluation function contains a first constraint term that has a value greater than 0 when a number of executions of the dummy task is other than two, for each of the plurality of mobile objects.

6. The evaluation function generation program according to claim 4 or 5, wherein the evaluation function includes a second constraint term that has a value greater than 0 when no task is executed at time before execution time of a task to be executed last by each of the plurality of mobile objects, among the assigned tasks.

7. The evaluation function generation program according to any one of claims 4 to 6, wherein the evaluation function includes a third constraint term that has a value greater than 0 when each of the plurality of mobile objects executes any task after moving to the end position.

8. An evaluation function generation method comprising:

acquiring layout information that expresses a movement route in which a plurality of mobile objects is movable in a directed graph, initial position information that indicates an initial position of the plurality of mobile objects, and task information that indicates a start position and an end position of each of a plurality of tasks;
specifying a first moving distance in which each of the plurality of mobile objects moves from end position of one task to end position of another task for each of multiple task pairs included in the plurality of tasks, based on the layout information, the initial position information, and the task information;
specifying a second moving distance of each of the plurality of mobile objects from the start position to the end position for each of the plurality of tasks, based on the layout information and the task information; and
generating, based on the first moving distance and the second moving distance, an evaluation function of an Ising model obtained by adding, to an objective function, a penalty term based on a sum of squared values of a total of the second moving distance of a task assigned to each of the plurality of mobile objects, the objective function expressing a total moving distance obtained by assigning each of the plurality of tasks to any of the plurality of mobile objects.

9. The evaluation function generation method according to claim 8, wherein the objective function is expressed by a quadratic expression that uses a state variable indicating whether or not each of the plurality of mobile objects executes a certain task at certain time.

10. An information processing apparatus comprising:

a memory configured to store layout information that expresses a movement route in which a plurality of mobile objects is movable in a directed graph, initial position information that indicates an initial position of the plurality of mobile objects, and task information that indicates a start position and an end position of each of a plurality of tasks; and
a processor configured to:

specify a first moving distance in which each of the plurality of mobile objects moves from end position of one task to end position of another task for each of multiple task pairs included in the plurality of tasks, based on the layout information, the initial position information, and the task information,
specify a second moving distance of each of the plurality of mobile objects from the start position to the end position for each of the plurality of tasks, based on the layout information and the task information, and
generate, based on the first moving distance and the second moving distance, an evaluation function of an Ising model obtained by adding, to an objective function, a penalty term based on a sum of squared values of a total of the second moving distance of a task assigned to each of the plurality of mobile objects, the objective function expressing a total moving distance obtained by assigning each of the plurality of tasks to any of the plurality of mobile objects.

11. The information processing apparatus according to claim 10, wherein
the objective function is expressed by a quadratic expression that uses a state variable indicating whether or not each of the plurality of mobile objects executes a certain task at certain time.

# FIG. 1

LAYOUT INFORMATION
(DIRECTED GRAPH)

S1

ACQUIRE
DATA

S2

CALCULATE MOVING DISTANCE
$dt(k_i, k_j, r)$ FROM END POSITION OF
ONE OF EACH TASK PAIR TO END
POSITION OF ANOTHER ONE

S3

CALCULATE MOVING DISTANCE
$dk(k)$ OF EACH TASK ITSELF

S4

GENERATE EVALUATION FUNCTION

$$F(x)= \sum_{r=1}^{m}\sum_{t=0}^{n-1}\sum_{i=0}^{n}\sum_{j=0}^{n}(dt(i,j,r) \cdot x[r,t,i] \cdot x[r,t+1,j]) \leftarrow \begin{array}{c}\text{OBJECTIVE}\\\text{FUNCTION}\end{array}$$

+CONSTRAINT TERM

$$+ \eta \sum_{r=1}^{m}\left[\sum_{t=1}^{n}\sum_{k=1}^{n} dk(k) \cdot x[r,t,k]\right]^{2} \leftarrow \text{PENALTY TERM}$$

S5

OUTPUT
EVALUATION
FUNCTION
INFORMATION

11a

L2

L6  L7  L8  L14  L18

L4-2  L9-1  L10  L16-2

L4-1  L17  L16-1

L5  L9-2

L3  L12  L11  L13  L15

L1

L1d1

---

STORAGE UNIT  11

LAYOUT
INFORMATION  11a

CARRIER MACHINE
INITIAL POSITION
1: L4-1
2: L9-1  11b

TASK
INFORMATION
1: (L8, L3)
2: (L6, L8)
3: (L11, L15)
4: (L18, L8)  11c

INFORMATION
PROCESSING APPARATUS  10

PROCESSING
UNIT  12

ISING
DEVICE  13

# FIG. 2

INFORMATION PROCESSING APPARATUS 20

CPU 21

RAM 22

HDD 23

INTERFACE 28

BUS

IMAGE SIGNAL PROCESSING UNIT 24 — 24a

INPUT SIGNAL PROCESSING UNIT 25 — 25a

MEDIUM READER 26 — 26a

COMMUNICATION INTERFACE 27 — NETWORK 27a

ISING DEVICE 29

# FIG. 3

FIG. 4

| to / from | L1d1 | L1 | L2 | L3 | L4-1 | L4-2 | L5 | L6 | L7 | L8 | L9-1 | L9-2 | L10 | L11 | L12 | L13 | L14 | L15 | L16-1 | L16-2 | L17 | L18 | L19 | L20 | L21-1 | L21-2 | L22 | L23 | L24 | L25 | L26 | L26d26 |
|---|---|---|---|---|---|---|---|---|---|---|---|---|---|---|---|---|---|---|---|---|---|---|---|---|---|---|---|---|---|---|---|---|
| L1d1 | 1 | | | | | | | | | | | | | | | | | | | | | | | | | | | | | | | |
| L1 | | | 1 | | | | | | | | | | | | | | | | | | | | | | | | | | | | | |
| L2 | | | | | | | | | | | | | | | | | | | | | | | | | | | | | | | | |
| L3 | | | | | 1 | | 1 | | | | | | | | | | | | | | | | | | | | | | | | | |
| L4-1 | | | | | | 1 | | | | | | | | | | | | | | | | | | | | | | | | | | |
| L4-2 | | | | | | | | 1 | | | | | | | | | | | | | | | | | | | | | | | | |
| L5 | | | | | | | | 1 | | | | | | | | | | | | | | | | | | | | | | | | |
| L6 | | | 1 | | | | | | 1 | | | | | | | | | | | | | | | | | | | | | | | |
| L7 | | | | | | | | | | 1 | | | | | | | | | | | | | | | | | | | | | | |
| L8 | | | | | | | | | | | 1 | | 1 | | | | | | | | | | | | | | | | | | | |
| L9-1 | | | | | | | | | | | | 1 | | | | | | | | | | | | | | | | | | | | |
| L9-2 | | | | | | | | | | | | | | 1 | | | | | | | | | | | | | | | | | | |
| L10 | | | | | | | | | | | | | | 1 | | | | | | | | | | | | | | | | | | |
| L11 | | | | | | | | | | | | | | | 1 | 1 | | | | | | | | | | | | | | | | |
| L12 | | | 1 | | | | | | | | | | | | | | | | | | | | | | | | | | | | | |
| L13 | | | | | | | | | | | | | | | | | | 1 | | | | | | | | | | | | | | |
| L14 | | | | | | | | | | 1 | | | | | | | | | | | | | | | | | | | | | | |
| L15 | | | | | | | | | | | | | | | | | | | 1 | | 1 | | | | | | | | | | | |
| L16-1 | | | | | | | | | | | | | | | | | | | | 1 | | | | | | | | | | | | |
| L16-2 | | | | | | | | | | | | | | | | | | | | | | 1 | | | | | | | | | | |
| L17 | | | | | | | | | | | | | | | | | | | | | | 1 | | | | | | | | | | |
| L18 | | | | | | | | | | | | | | | | | 1 | | | | | | 1 | | | | | | | | | |
| L19 | | | | | | | | | | | | | | | | | | | | | | | | 1 | | | | | | | | |
| L20 | | | | | | | | | | | | | | | | | | | | | | | | | 1 | | 1 | | | | | |
| L21-1 | | | | | | | | | | | | | | | | | | | | | | | | | | 1 | | | | | | |
| L21-2 | | | | | | | | | | | | | | | | | | | | | | | | | | | | 1 | | | | |
| L22 | | | | | | | | | | | | | | | | | | | | | | | | | | | | 1 | | | | |
| L23 | | | | | | | | | | | | | | | | | | | | | | | | | | | | | 1 | 1 | | |
| L24 | | | | | | | | | | | | | | | | | 1 | | | | | | | | | | | | | | | |
| L25 | | | | | | | | | | | | | | | | | | | | | | | | | | | | | | | | |
| L26 | | | | | | | | | | | | | | | | | | | | | | | | 1 | | | | | | | | |
| L26d26 | | | | | | | | | | | | | | | | | | | | | | | | | | | | | | | 1 | |

# FIG. 5

# FIG. 6

| CARRIER MACHINE INITIAL POSITION | |
|---|---|
| CARRIER MACHINE NUMBER r : | NODE NAME |
| 1: | L4-1 |
| 2: | L9-1 |
| 3: | L21-1 |
| 4: | L21-2 |

# FIG. 7

TASK INFORMATION

| TASK NUMBER k : | (START POSITION, END POSITION) |
|:---:|:---:|
| 1: | (L8, L3) |
| 2: | (L6, L8) |
| 3: | (L11, L15) |
| 4: | (L18, L8) |
| 5: | (L11,L20) |

# FIG. 8

START

↓

| ACQUIRE DATA | ~ S10 |

↓

| CALCULATE pt0[k, r] | ~ S11 |

↓

| CALCULATE pt1[k, r] | ~ S12 |

↓

| CALCULATE dist(p[i], p[j]) | ~ S13 |

↓

| CALCULATE dt(ki, kj, r) | ~ S14 |

↓

| CALCULATE dk(k) | ~ S15 |

↓

| GENERATE EVALUATION FUNCTION (OBJECTIVE FUNCTION + CONSTRAINT TERMS 1TO 6 + PENALTY TERM) | ~ S16 |

↓

| OUTPUT QUBO PROBLEM DATA | ~ S17 |

↓

END

# FIG. 9

| pt0[k,r] | |
| --- | --- |
| (k, r): | NODE NAME |
| (0, 1): | L4-1 |
| (0, 2): | L9-1 |
| (0, 3): | L21-1 |
| (0, 4): | L21-2 |
| (1, 1): | L8 |
| (1, 2): | L8 |
| (1, 3): | L8 |
| (1, 4): | L8 |
| (2, 1): | L6 |
| (2, 2): | L6 |
| (2, 3): | L6 |
| (2, 4): | L6 |
| (3, 1): | L11 |
| (3, 2): | L11 |
| (3, 3): | L11 |
| (3, 4): | L11 |
| (4, 1): | L18 |
| (4, 2): | L18 |
| (4, 3): | L18 |
| (4, 4): | L18 |
| (5, 1): | L11 |
| (5, 2): | L11 |
| (5, 3): | L11 |
| (5, 4): | L11 |

# FIG. 10

| pt1[k,r] | |
|---|---|
| (k, r): | NODE NAME |
| (0, 1): | L4-1 |
| (0, 2): | L9-1 |
| (0, 3): | L21-1 |
| (0, 4): | L21-2 |
| (1, 1): | L3 |
| (1, 2): | L3 |
| (1, 3): | L3 |
| (1, 4): | L3 |
| (2, 1): | L8 |
| (2, 2): | L8 |
| (2, 3): | L8 |
| (2, 4): | L8 |
| (3, 1): | L15 |
| (3, 2): | L15 |
| (3, 3): | L15 |
| (3, 4): | L15 |
| (4, 1): | L8 |
| (4, 2): | L8 |
| (4, 3): | L8 |
| (4, 4): | L8 |
| (5, 1): | L20 |
| (5, 2): | L20 |
| (5, 3): | L20 |
| (5, 4): | L20 |

# FIG. 11

| p[i] \ p[j] | L1d1 | L1 | L2 | L3 | L4-1 | ..... |
|---|---|---|---|---|---|---|
| L1d1 | 0 | 1 | 5 | 2 | 3 | ..... |
| L1 | 9223372036854775807 | 0 | 4 | 1 | 2 | ..... |
| L2 | 9223372036854775807 | 9223372036854775807 | 0 | 9223372036854775807 | 9223372036854775807 | ..... |
| L3 | 9223372036854775807 | 9223372036854775807 | 3 | 0 | 1 | ..... |
| L4-1 | 9223372036854775807 | 9223372036854775807 | 3 | 8 | 0 | ..... |
| L4-2 | 9223372036854775807 | 9223372036854775807 | 2 | 7 | 8 | ..... |
| ⋮ | ⋮ | ⋮ | ⋮ | ⋮ | ⋮ | ⋮ |

# FIG. 12

| $k_j$ \ $k_i$ | | 0, 1, 2, 3, 4, 5 |
|---|---|---|
| r=1 | 0 | 0, 1, 5, 9, 5, 13 |
| | 1 | 8, 8, 4, 8, 4, 12 |
| | 2 | 4, 4, 8, 12, 8, 16 |
| | 3 | 8, 8, 4, 8, 4, 12 |
| | 4 | 12, 12, 8, 4, 8, 8 |
| | 5 | 12, 12, 8, 12, 8, 16 |
| r=2 | 0 | 0, 5, 1, 5, 1, 9 |
| | 1 | 12, 8, 4, 8, 4, 12 |
| | 2 | 8, 4, 8, 12, 8, 16 |
| | 3 | 4, 8, 4, 8, 4, 12 |
| | 4 | 8, 12, 8, 4, 8, 8 |
| | 5 | 8, 12, 8, 12, 8, 16 |
| r=3 | 0 | 0, 13, 9, 5, 9, 1 |
| | 1 | 12, 8, 4, 8, 4, 12 |
| | 2 | 16, 4, 8, 12, 8, 16 |
| | 3 | 12, 8, 4, 8, 4, 12 |
| | 4 | 8, 12, 8, 4, 8, 8 |
| | 5 | 16, 12, 8, 12, 8, 16 |
| r=4 | 0 | 0, 14, 10, 6, 10, 2 |
| | 1 | 11, 8, 4, 8, 4, 12 |
| | 2 | 15, 4, 8, 12, 8, 16 |
| | 3 | 11, 8, 4, 8, 4, 12 |
| | 4 | 7, 12, 8, 4, 8, 8 |
| | 5 | 15, 12, 8, 12, 8, 16 |

# FIG. 13

| | | k=0 | k=1 | k=2 | k=3 | k=4 | k=5 |
|---|---|---|---|---|---|---|---|
| r=1 | t=0 | 1 | | | | | |
| | t=1 | | | 1 | | | |
| | t=2 | | 1 | | | | |
| | t=3 | 1 | | | | | |
| | t=4 | 0 | 0 | 0 | 0 | 0 | 0 |
| | t=5 | 0 | 0 | 0 | 0 | 0 | 0 |
| r=2 | t=0 | 1 | | | | | |
| | t=1 | | | | 1 | | |
| | t=2 | | | | | 1 | |
| | t=3 | 1 | | | | | |
| | t=4 | 0 | 0 | 0 | 0 | 0 | 0 |
| | t=5 | 0 | 0 | 0 | 0 | 0 | 0 |
| r=3 | t=0 | 1 | | | | | |
| | t=1 | 1 | | | | | |
| | t=2 | 0 | 0 | 0 | 0 | 0 | 0 |
| | t=3 | 0 | 0 | 0 | 0 | 0 | 0 |
| | t=4 | 0 | 0 | 0 | 0 | 0 | 0 |
| | t=5 | 0 | 0 | 0 | 0 | 0 | 0 |
| r=4 | t=0 | 1 | | | | | |
| | t=1 | | | | | | 1 |
| | t=2 | 1 | | | | | |
| | t=3 | 0 | 0 | 0 | 0 | 0 | 0 |
| | t=4 | 0 | 0 | 0 | 0 | 0 | 0 |
| | t=5 | 0 | 0 | 0 | 0 | 0 | 0 |

# FIG. 14

# FIG. 15

# FIG. 16

## EP 3 955 139 A1

Europäisches
Patentamt

European
Patent Office

Office européen
des brevets

# EUROPEAN SEARCH REPORT

**Application Number**

EP 21 18 0269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEBASTIAN FELD ET AL: "A Hybrid Solution Method for the Capacitated Vehicle Routing Problem Using a Quantum Annealer", ARXIV.ORG, CORNELL UNIVERSITY LIBRARY, 201 OLIN LIBRARY CORNELL UNIVERSITY ITHACA, NY 14853, 18 November 2018 (2018-11-18), XP081368717, * page 2, section 4.3 * | 1-11 | INV. G06F17/11 G06Q10/08 G01C21/34 G06Q10/04 ADD. G06N3/04 G06N5/00 G06N7/00 |
| X | US 10 733 877 B2 (VOLKSWAGEN AG [DE]; AUDI AG [DE]) 4 August 2020 (2020-08-04) * column 11 - column 14 * | 1-11 | |
| X | FRANK PHILLIPSON ET AL: "Multimodal Container Planning: a QUBO Formulation and Implementation on a Quantum Annealer", ARXIV.ORG, CORNELL UNIVERSITY LIBRARY, 201 OLIN LIBRARY CORNELL UNIVERSITY ITHACA, NY 14853, 3 July 2020 (2020-07-03), XP081714324, * page 4 - page 7 * | 1-11 | |
| X | AKSHAY AJAGEKAR ET AL: "Quantum Computing based Hybrid Solution Strategies for Large-scale Discrete-Continuous Optimization Problems", ARXIV.ORG, CORNELL UNIVERSITY LIBRARY, 201 OLIN LIBRARY CORNELL UNIVERSITY ITHACA, NY 14853, 29 October 2019 (2019-10-29), XP081522351, * section 5 * | 1-11 | TECHNICAL FIELDS SEARCHED (IPC) G06F G06Q G01C |

-/--

The present search report has been drawn up for all claims

| Place of search | Date of completion of the search | Examiner |
|---|---|---|
| Berlin | 29 November 2021 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 18 0269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAPALITSAS CHRISTOS ET AL: "A QUBO Model for the Traveling Salesman Problem with Time Windows", ALGORITHMS, vol. 12, no. 11, November 2019 (2019-11), page 224, XP055867093, ISSN: 1999-4893, DOI: 10.3390/a12110224 * page 10 - page 17 * ----- | 1-11 | |

TECHNICAL FIELDS
SEARCHED      (IPC)

The present search report has been drawn up for all claims

| Place of search | Date of completion of the search | Examiner |
|---|---|---|
| Berlin | 29 November 2021 | Huguet Serra, G |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 18 0269

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2021

| Patent document cited in search report | | Publication date | Patent family member(s) | | Publication date |
|---|---|---|---|---|---|
| US 10733877 | B2 | 04-08-2020 | CN | 111566709 A | 21-08-2020 |
| | | | EP | 3718096 A1 | 07-10-2020 |
| | | | US | 2019164418 A1 | 30-05-2019 |
| | | | WO | 2019105971 A1 | 06-06-2019 |

EPO FORM P0459

For more details about this annex : see Official Journal of the European Patent Office, No. 12/82

## REFERENCES CITED IN THE DESCRIPTION

**Patent documents cited in the description**

- JP 2017515195 A
- JP 2017134794 A
- JP 2013250941 A

**Non-patent literature cited in the description**

- **RYOSUKE NAKAMURA ; KENJI SAWADA ; SEI-ICHI SHIN ; KENJI KUMAGAI ; HISATO YONEDA.** Simultaneous Optimization of Dispatching and Routing for OHT Systems via State Space Representation. *Transactions of the Society of Instrument and Control Engineers,* 2014, vol. 50 (4), 210-218